(19) **Europäisches Patentamt**

**European Patent Office**

**Office européen des brevets**

(11) **EP 4 633 166 A1**

(12) **EUROPEAN PATENT APPLICATION**

(43) Date of publication:
**15.10.2025 Bulletin 2025/42**

(21) Application number: **24315157.8**

(22) Date of filing: **12.04.2024**

(51) International Patent Classification (IPC):
**H04N 19/597** $^{(2014.01)}$    **G06T 9/40** $^{(2006.01)}$
**H04N 19/96** $^{(2014.01)}$

(52) Cooperative Patent Classification (CPC):
**H04N 19/597; G06T 9/001; G06T 9/40;**
**H04N 19/96;** H04N 19/436

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
- **Sandri, Gustavo**
  **35510 CESSON-SEVIGNE (FR)**
- **Thudor, Franck**
  **35000 RENNES (FR)**
- **Chupeau, Bertrand**
  **35700 RENNES (FR)**
- **Sabater, Neus**
  **35830 BETTON (FR)**

(74) Representative: **Vossius & Partner**
**Patentanwälte Rechtsanwälte mbB**
**Siebertstraße 3**
**81675 München (DE)**

(54) **INTER BLOCK MULTI-LAYER INTRA PREDICTION FOR REGION-ADAPTIVE HIERARCHICAL TRANSFORM**

(57)     In a point cloud codec, attributes correspond to nodes in a tree structure. The tree is partitioned into subtrees, each subtree having a respective root node. The root nodes may all be at a layer $L_{global}$. Attributes of the subtree root nodes may be coded using intra coding, with residuals coded using a region-adaptive hierarchical transform (RAHT). To allow for parallel decoding, nodes of the subtrees may be intra predicted using neighboring nodes from different subtrees as reference nodes even if they have not yet been reconstructed, e.g. by temporarily using the attributes of the subtree root node as the attribute of one or more of the reference nodes for purposes of the intra prediction. Those temporary attributes may be replaced with the actual attributes once the nodes in the subtree have been reconstructed (e.g. using a local RAHT for each subtree).

**FIG. 8**

**EP 4 633 166 A1**

**Description**

**BACKGROUND**

Advances in 3D capturing and rendering technologies are enabling new applications and services in the fields of autonomous driving, cultural heritage archival, immersive telepresence and virtual/augmented reality. Point clouds have arisen as one of the main 3D scene representations for such applications. A point cloud frame consists of a set of 3D points, each point being represented with its 3D position and possibly several attributes such as color, transparency, reflectance, etc.

Standardization activity for point cloud compression is being carried out by the ISO/IEC JTC1/SC29/WG7 "MPEG 3D Graphics and Haptics Coding" group, as described in D. Graziosi et al., "An overview of ongoing point cloud compression standardization activities: video-based (V-PCC) and geometry-based (G-PCC)," APSIPA Transactions on Signal and Information Processing, Volume 9, Vol. 9, No. 1, e13, 2020. The first edition of the Geometry-based Point Cloud Compression standard (G-PCC) standard, part 9 of the ISO/IEC 23090 series on the coded representation of immersive media, is described in ISO/IEC 23090-9:2023, Information technology - Coded representation of immersive media - Part 9: Geometry-based point cloud compression.

Within the framework of G-PCC, second edition in construction, the compression of dense dynamic point clouds proceeds with a geometry-based approach. That is, it operates in the 3D space domain, without 3D-to-2D round trip to leverage existing 2D video codecs The current G-PCC codec for dense dynamic point clouds, so called GeS-TM, is described in "GeS-TM v4: User manual of Test Model v4 for Geometry-based Solid point cloud coding," ISO/IEC JTC1/SC29/WG7, 144th MPEG meeting, Hannover, Tech. Rep. N00750, Oct. 2023. This codec combines the following tools:

- Pruned occupancy tree (octree) and triangle soups for geometry coding.
- Region-Adaptive Hierarchical Transform (RAHT) for color attribute coding.
- Motion compensated inter-frame prediction.
- Context-adaptive arithmetic coding.

**SUMMARY**

A point cloud decoding method according to some embodiments comprises: obtaining a first attribute value for a first node in a tree structure including a plurality of subtrees, each subtree having a respective root node and a plurality of leaf nodes, the first node being a root node of a first one of the subtrees; and obtaining an intra prediction of a second attribute value of a second node, the second node being a node of a second one of the subtrees different from the first subtree, wherein at least a third node is used as a reference node for the intra prediction, the third node being a node of the first subtree other than the root node of the first subtree and being associated with at least one voxel, and wherein the first attribute value is used as an attribute value of the third node for purposes of the intra prediction.

Example embodiments include a point cloud decoding apparatus comprising one or more processors configured to perform any of the decoding methods described herein.

A point cloud encoding method according to some embodiments comprises: for a plurality of voxels, obtaining data representing at least one attribute of the respective voxel, wherein each voxel corresponds to a node of a tree structure, the tree structure including a plurality of subtrees, each subtree having a respective root node and a plurality of leaf nodes; obtaining a first attribute value for a first node, the first node being a root node of a first one of the subtrees; and obtaining an intra prediction of a second attribute value of a second node, the second node being a node of a second one of the subtrees different from the first subtree, wherein at least a third node is used as a reference node for the intra prediction, the third node being a node of the first subtree other than the root node of the first subtree, and wherein the first attribute value is used as an attribute value of the third node for purposes of the intra prediction.

Example embodiments include a point cloud encoding apparatus comprising one or more processors configured to perform any of the encoding methods described herein.

In some embodiments, a plurality of nodes in the first subtree are used as reference nodes for the intra prediction, and the first attribute value is used as an attribute value of each of the plurality of reference nodes.

In some embodiments, the first node is at a layer $L_{global}$ in the tree structure, and information is signaled in a bitstream identifying the layer $L_{global}$.

In some embodiments, each of the plurality of subtrees has a root node at the layer $L_{global}$.

In some embodiments, obtaining the first attribute value for the first node comprises obtaining an intra prediction of the first node from attribute values of nodes at a same layer as the first node in the tree structure.

In some embodiments, a prediction residual of the first node is encoded using a first region-adaptive hierarchical transform, RAHT, and obtaining the first attribute value for the first node comprises adding the decoded prediction residual of the first node to the intra prediction of the first node. In some embodiments, coefficients of the first RAHT are encoded in a bitstream.

In some embodiments, a prediction residual of the second node is encoded using a second region-adaptive hierarchical transform, RAHT, and the second attribute value of the second node is reconstructed by adding the prediction residual of the second node to the intra prediction of the second node. In some embodiments, coefficients of the second RAHT are encoded in a bitstream. In some embodiments, coefficients of a respective local RAHT are encoded in the bitstream for each of the subtrees.

Some embodiments further include reconstructing attributes of the first subtree after obtaining the intra prediction of the second attribute value of the second node.

Some embodiments include a computer-readable medium storing instructions for performing any of the methods described herein.

## BRIEF DESCRIPTION OF THE DRAWINGS

FIG. 1 is a schematic flow diagram illustrating an overview of an example point cloud encoding and decoding method.

FIG. 2 is a schematic illustration of a sparse one-dimensional array of attributes.

FIG. 3 is a schematic illustration of a tree structure used to encode the sparse one-dimensional array of attributes of FIG. 2 using a region adaptive hierarchical transform (RAHT).

FIG. 4 is a schematic illustration of an octree structure that may be used for RAHT coding of attributes in a 3D space.

FIG. 5 illustrates a portion of tree structure according to some embodiments divided into a global portion and a local portion.

FIG. 6 illustrates a portion of tree structure according to some embodiments, illustrating how each leaf node of the global portion of the tree is a root node of a respective sub-tree.

FIG. 7 illustrates a tree structure representing attribute information of a current block and associated reference blocks.

FIG. 8 illustrates a tree structure undergoing an encoding or decoding operation as described herein.

FIG. 9 is a flow diagram illustrating a decoding method according to an example embodiment.

FIG. 10 is a functional block diagram of an apparatus that may be used to implement the encoding and/or decoding methods described herein.

## DETAILED DESCRIPTION

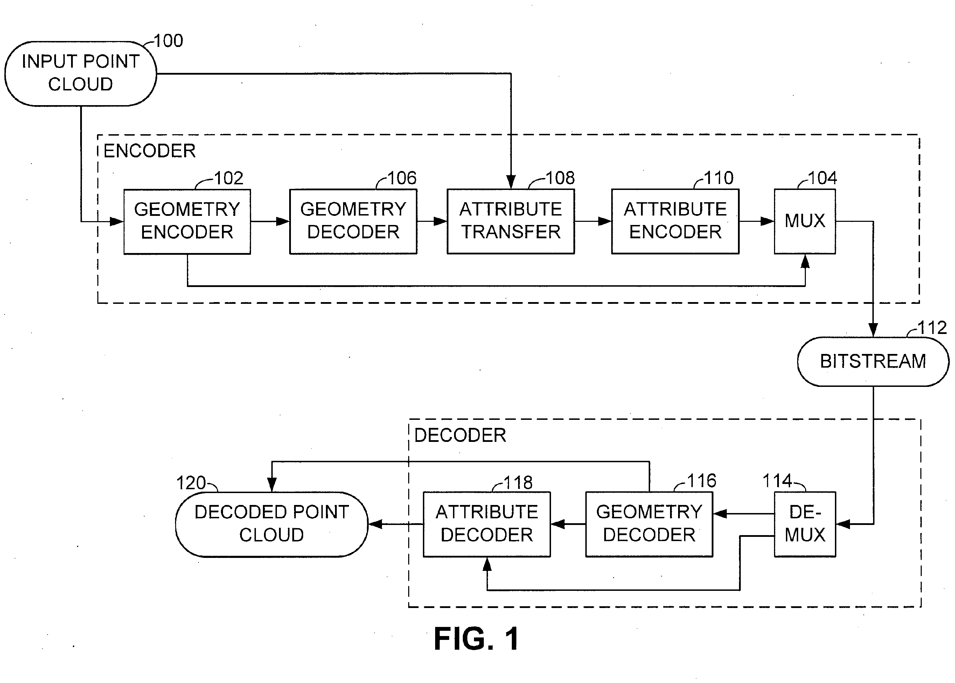

In an example of point cloud encoding and decoding, geometry and attributes are sequentially compressed, as illustrated in FIG. 1. The attributes may be colors, for example. More precisely, the geometry is first compressed, then input attributes are transferred onto the reconstructed geometry (after decompression) and compressed. Which means that at decoder side, the reconstructed geometry is available when decoding the attributes. As illustrated in FIG. 1, a geometry encoder 102 obtains an input point cloud 100. The encoded geometry is provided to a multiplexer 104 for encoding in a bitstream 112. The encoded geometry is also decoded at 106, so that the reconstructed geometry (i.e. the geometry that will be available to a decoder) can be used with attribute encoding. At 108, an attribute transfer process is performed to transfer the attributes of the input point cloud to the points of the reconstructed point cloud (which, in the case of lossy compression, will not necessarily be at the same positions as the input point cloud). The attributes of the reconstructed point cloud are encoded at 110, and the encoded attributes are provided to the demultiplexer for inclusion in the bitstream 112. At a decoder, the decoder obtains the bitstream. A demultiplexer 114 processes the bitstream and provides the encoded geometry to a geometry decoder 116. The demultiplexer also provides the encoded attributes to an attribute decoder 118. The attribute decoder 118 applies the decoded attributes to the reconstructed point cloud as provided by the geometry decoder 116, resulting in the decoded point cloud 120.

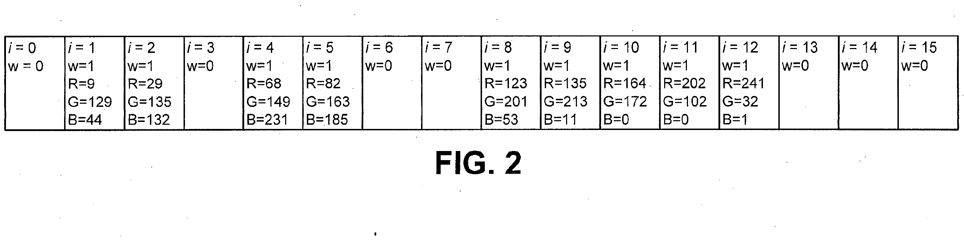

The region adaptive hierarchical transform (RAHT) is used to encode attributes distributed in a regular grid where the data is sparse. It is commonly used in the attribute encoder for point clouds to transform the attributes of sparse occupied voxels distributed in a 3D grid. The attributes can be, for example, the color, transparency, reflectance, normal, and the like. FIG. 2 is a 1D example, provided here for ease of representation, that can be extrapolated to any dimension, where the attribute may be, for example, the color of the pixel (voxel for 3D). Not all pixels are available, and are marked as void, meaning that they do not have an attribute associated to it. For example, the pixels labeled $i = 0, 3, 6, 7, 13, 14, and 15$ are void pixels.

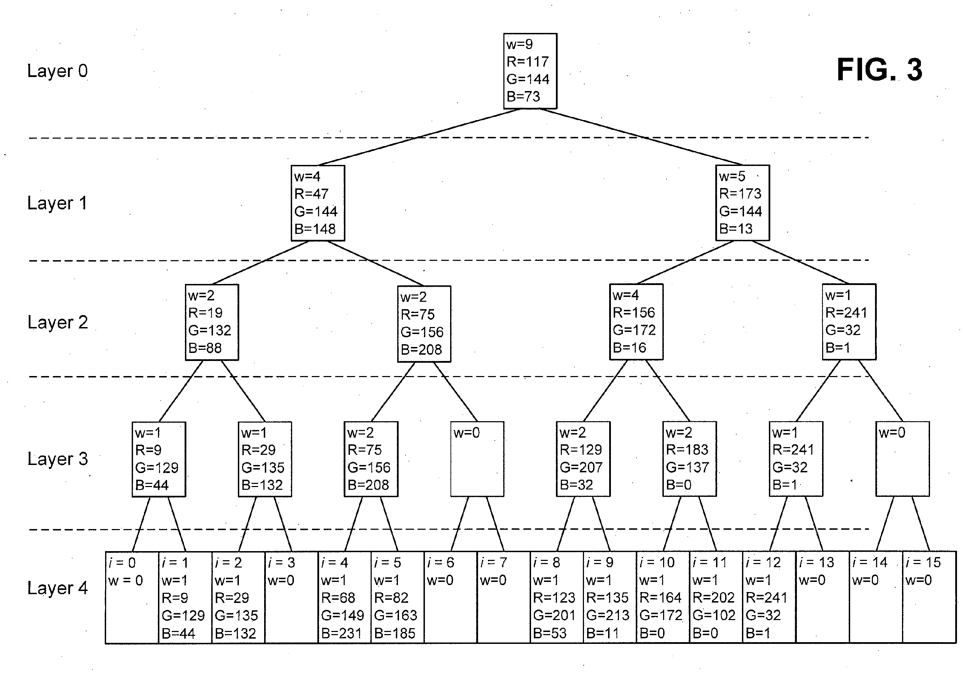

RAHT is a hierarchical transform, based on the wavelet Haar transform. In a conventional RAHT, data is firstly represented by a tree, as shown in FIG. 3, that is created based on the example shown in FIG. 2. At the highest layer (layer 4, in this example), every node represents the attribute of the pixel at the corresponding position. The nodes have a weight associated with them. At the highest layer, the weight is equal to 1 if the node corresponds to a non-void pixel and 0 otherwise.

Going from layer 4 to layer 3, nodes are combined 2 by 2 (in this one dimensional example). The attributes of the nodes at layer 3 are given by the weighted average of the nodes connected to it (using the weights of the nodes to compute the weighted average). Also, the weight of the nodes at layer 3 is given by the sum of weights of the nodes connected to it. The process is repeated until reaching the root node at layer 0, whose attribute is the average value of all non-void pixels attributes, and its weight is equal to the number of non-void pixels.

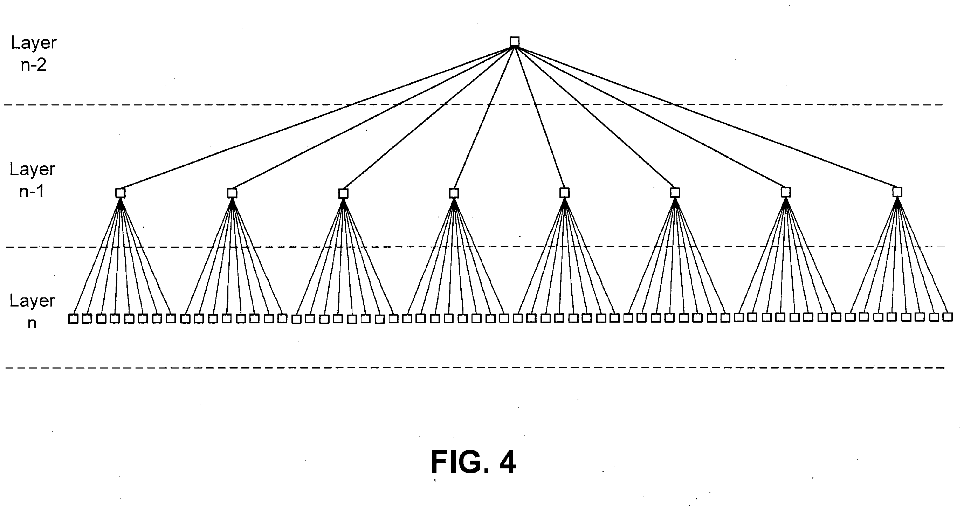

This process can be generalized to any dimension by indexing the attributes by their Morton code. The difference with the 1D example is that the nodes are combined k-times to go from one layer to another, as shown in FIG. 4 for a 3D space. The value of k may be based on the dimensionality, e.g. $k=2^d$, where d is the dimensionality. Thus, for a 3D space, an octree can be used, with eight nodes being combined at each layer into a weighted average at the next-lower layer. For a 2D space, a quadtree can be used, with four nodes being combined into each weighted average. For a 1D space, as shown in the example of FIG. 2 and FIG. 3, two nodes are combined into each weighted average. FIG. 4 schematically illustrates a portion of a data structure for an octree decomposition that may be used for 3D space, representing how eight nodes being combined at each layer into a weighted average at the next-lower layer.

After constructing the tree, the transform is executed, that follows the tree starting at the root node, going layer per layer to the leaf nodes. The transform is orthonormal and equivalent to multiply the attributes of the child nodes of the current node that are being transformed,

$$A = \begin{bmatrix} a_1\sqrt{w_1} \\ a_2\sqrt{w_2} \\ \vdots \end{bmatrix},$$

where $a_i$ is the attribute of the i-th child node, by a matrix T that depends on the child nodes weights $w_1, w_2, ...,$ resulting in the transformed coefficients:

$$C = TA.$$

The inverse transform is obtained by the inverse operation:

$$A = T^T C$$

Thus, the encoder transforms the attributes going through the tree, starting at the tree root. The coefficients are quantized and entropy encoded to the bitstream. The decoder also creates the tree structure but without attributes, and the decoding process also starts at the root node and follows the three the same way as the encoder. The decoder obtains the quantized coefficients from the bitstream and executes the inverse transform to obtain the nodes attributes. After the attributes of the leaf nodes have been processed, the encoding/decoding process is finished.

Example embodiments are configured to allow for prediction of the attributes of the child nodes using neighboring nodes either on the same or the previous layer. For the decoder to be able to perform the same operation, only the attributes of nodes that have already been decoded are used to create a prediction. As the encoding is lossy, the encoder also implements parts of the decoder to obtain the same reconstructed attributes, considering the quantization noise that is added, that will be available at the decoder, so both encoder and decoder will do the same prediction.

Three categories of prediction can be described as follows:

- Null prediction: do not execute a prediction.
- Intra prediction: conduct prediction using the attributes of already decoded nodes in the current frame.
- Inter prediction: conduct prediction using the attributes of an already decoded frame.

Let *A'* be the prediction of the child node attributes of a given node. In an example embodiment, instead of directly encoding the attributes, the residuals of the attributes are encoded, and thus the coefficients that will be encoded are:

$$C = T(A - A')$$

After quantization and dequantization of the coefficients C, we obtain the reconstructed coefficients $\hat{C}$, which are used to obtain the reconstructed attributes as

$$\hat{A} = T^T \hat{C} + A'$$

The conventional RAHT transform imposes some problems for real time applications because it generally cannot be parallelized due to the intra prediction. In other words, the entire point cloud frame is taken as a whole by the RAHT transform, which prevents parallel independent encoding of sub-blocks of the voxel grid.

Example embodiments allow for parallelism. In example embodiments, a point cloud is divided into blocks for encoding/decoding. Conventionally, this division into blocks would break the intra prediction. In example embodiments, however, encoding is performed in different steps: a global step and a local step. The global step encodes the average color of each block, and the local step encodes the attributes of each block. The average color of all blocks, which was encoded in the global step, is used to create a prediction for each block. Also, nodes that have already been encoded in each neighboring block are passed as information to create an intra prediction.

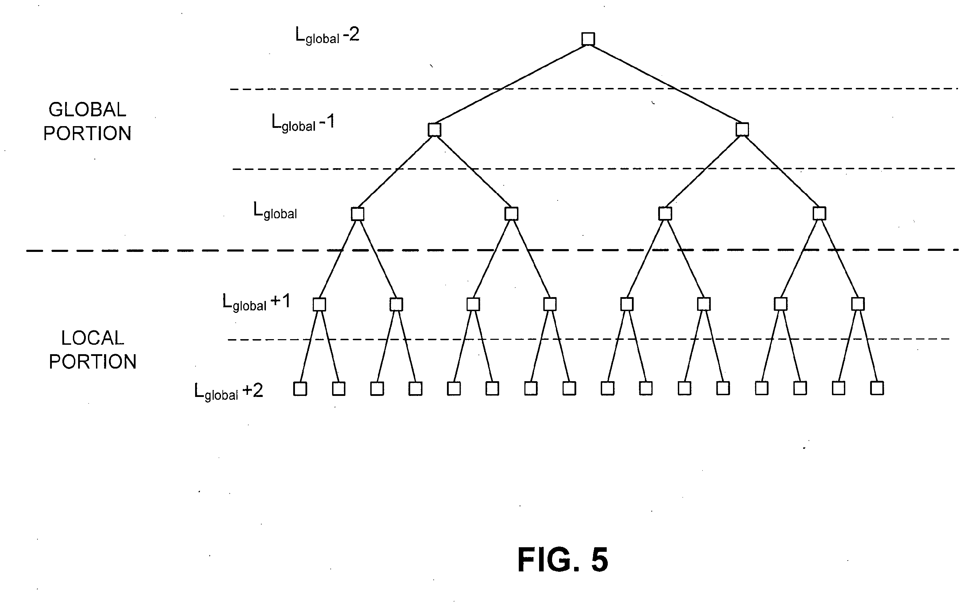

Example embodiments allow for RAHT to be executed locally by dividing the point cloud in blocks that can be encoded/decoded in parallel. This may be done as shown in the example of FIG. 5. The attributes are decomposed in a tree, but the encoding/decoding is divided into two phases.

In a global phase, starting from the root, the attributes are encoded (or decoded) layer by layer, stopping at layer $L_{global}$, before arriving to the leaf nodes. The parameter $L_{global}$ is a parameter that can be fixed or chosen by the user and can be signaled in the high level syntax.

In a local phase, from layer $L_{global}$ on, RAHT is applied locally.

FIG. 5 illustrates a portion of tree structure according to some embodiments divided into a global portion and a local portion.

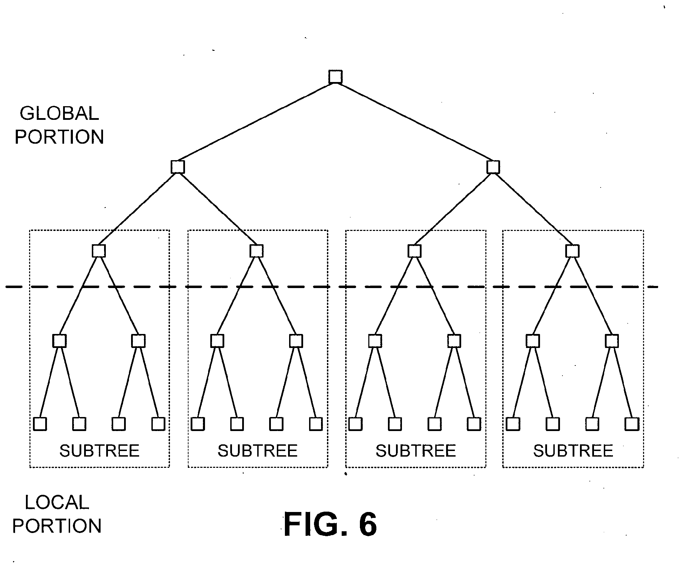

In such embodiments, at layer $L_{global}$, now every node is the root of a sub-tree that can be encoded/decoded in parallel, as shown in FIG. 6. The sub-tree represents attribute data of a particular block.

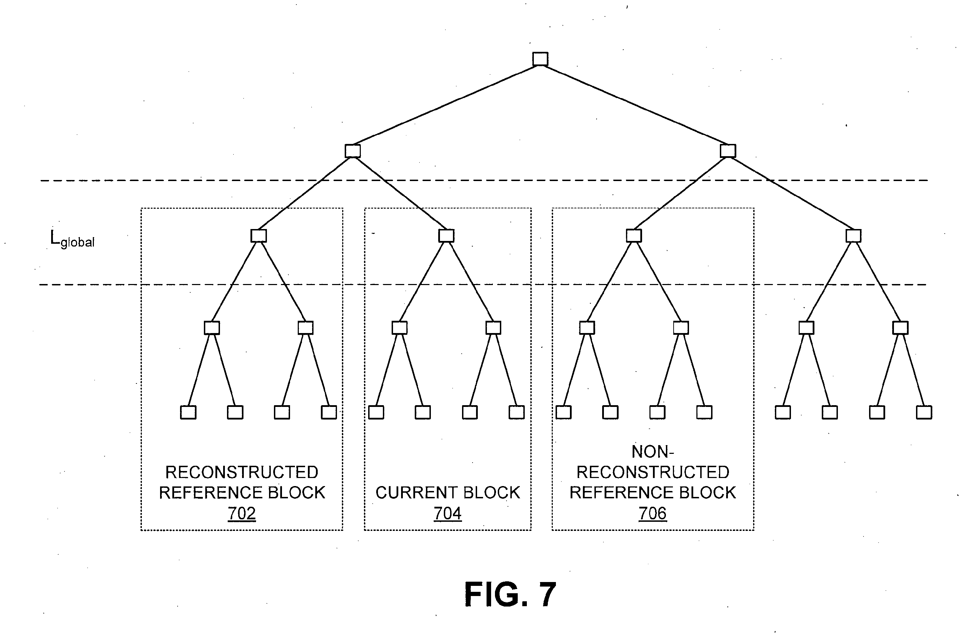

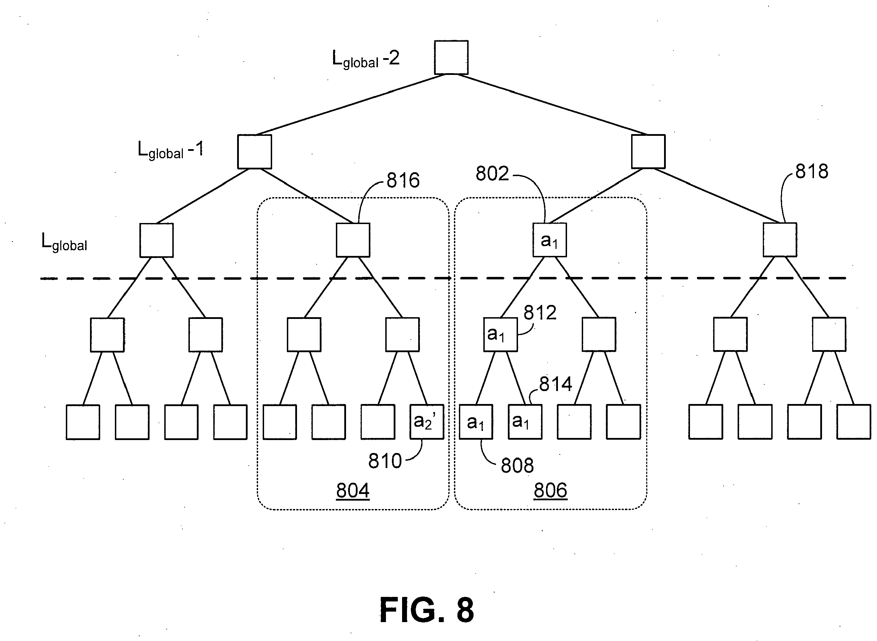

An example embodiment is described with reference to FIGs. 7 and 8. When encoding or decoding a given current block, such as current block 704 in FIG. 7, information from partly or fully reconstructed nodes in neighboring blocks may be used for intra prediction of the current block. For example, if a neighboring block,' such as block 702, has already been reconstructed when the current block starts to be reconstructed, some or all of its decoded nodes may be used for intra prediction of the current block. In some embodiments, this may be done by appending some nodes of the already-reconstructed block to the current block sub-tree. In some embodiments, only the nodes that will be used for intra prediction are appended.

In addition, in some embodiments, a neighboring block such as block 706, that has not yet been reconstructed, may be used for intra prediction of the current block 704. This may be done by using the attribute of its node at layer $L_{global}$ because that attribute information was already processed in the global step. The attribute information determined at the global level may be propagated to one or more of the child nodes in the block. In some embodiments, one or more of the nodes from the non-reconstructed block are appended to the current block sub-tree using the global-level attribute. In some embodiments, only the nodes that will be used for intra prediction are appended, for example the nodes nearest the current block.

FIG. 8 illustrates a point cloud decoding method according to an example embodiment. As illustrated in FIG. 8, a first attribute value $a_1$ is obtained for a first node 802. Node 802 is a node in a tree structure that includes a plurality of subtrees (e.g. subtrees 804, 806). The subtrees may be non-overlapping subtrees. Each subtree has a respective root node (e.g. root node 802 of subtree 806) and a plurality of leaf nodes (e.g. node 808 of subtree 806, and node 810 of subtree 804, among others). The first node 802 is a root node of a first one of the subtrees, namely subtree 806. An intra prediction $a_2'$ is obtained of a second attribute value of a second node 810. The second node is a leaf node of a second one of the subtrees 804 different from the first subtree 806. At least a third node 808 is used as a reference node for the intra prediction. The third node is a leaf node of the first subtree 806 and is associated with a respective voxel. The first attribute value, $a_1$, is used as an attribute value of the third node for purposes of the intra prediction. This allows the attribute values of nodes in subtree 804 to be intra predicted even if the nodes in subtree 806 have not yet been reconstructed.

In some embodiments, in addition to using one or more nodes in subtree 806 as reference nodes, one or more nodes in other subtrees (including reconstructed subtrees) may also be used as reference nodes to obtain the intra prediction of node 810.

In some embodiments, a plurality of nodes in the first subtree, such as nodes 808, 812, and 814, are used as reference nodes for the intra prediction. In some such embodiments, the first attribute value, $a_1$, is used as an attribute value of each of the plurality of reference nodes. In some embodiments, the first attribute value is used as an attribute value of all nodes in the first subtree for purposes of intra prediction.

In some embodiments, the first node 802 is at a layer $L_{global}$ in the tree structure. In some such embodiments, information identifying the layer $L_{global}$ is signaled in a bitstream representing the point cloud. In some embodiments, each of the plurality of subtrees has a root node at the layer $L_{global}$.

In some embodiments, the first attribute value $a_1$ for the first node 802 is obtained using an intra prediction of the first node from attribute values of other nodes in the tree structure, such as nodes 816 and/or 818 in the same layer as the first node, and/or other nodes in a different (e.g. lower) layer. In some such embodiments, a prediction residual $\Delta a_1$ of the first node is encoded using coefficients of a first region-adaptive hierarchical transform, RAHT. The first RAHT may encode attribute information only for nodes at or below the layer $L_{global}$ in the tree structure (note that the layers below $L_{global}$ in the tree structure, such as layers $L_{global}-1$ and $L_{global}-2$, are above layer $L_{global}$ in the drawing of FIG. 8). In some embodiments, obtaining the first attribute value $a_1$ for the first node comprises adding the prediction residual $\Delta a_1$ of the first node to the intra prediction of the first node.

In some embodiments, at the encoder side, the prediction residual $\Delta a_1$ may be obtained as follows. The intra prediction $a_1'$ may be determined, and that intra prediction may be subtracted from an input attribute value for the first node 802 to obtain an uncoded residual. (The attribute value of node 802 may be a weighted average as described above.) The uncoded residuals of the first node 802 and other nodes in the level $L_{global}$ may be encoded using an RAHT, for example, those uncoded residuals may be transformed as described above to obtain a set C of coefficients. The coefficients may be quantized and entropy coded into a bitstream representing the point cloud. The encoder also de-quantizes the coefficients and performs an inverse transformation to recover the prediction residual $\Delta a_1$, which will be the same prediction residual that is available to the decoder.

In some embodiments, at the decoder side, the RAHT coefficients are entropy decoded from the bitstream, de-quantized, and inverse-transformed to recover the prediction residual $\Delta a_1$.

In some embodiments, the prediction residuals of the nodes in the second subtree 804 are encoded using a second region-adaptive hierarchical transform, RAHT. For example, at the encoder side, the prediction residual $\Delta a_2$ for node 810 may be obtained as follows. The intra prediction $a_2'$ may be determined, and that intra prediction may be subtracted from an input attribute value for the first node 810 to obtain an uncoded residual. (The attribute value of node 810 may be an attribute of a voxel associated with node 810, such as a color component, a reflectance, a transparency, or the like.) The uncoded residuals of the node 810 and other nodes in the subtree 804 may be encoded using a local RAHT. For example, those uncoded residuals may be transformed as described above to obtain a set C of coefficients. The coefficients may be quantized and entropy coded into the bitstream. The encoder also de-quantizes the coefficients and performs an inverse transformation to recover the prediction residual $\Delta a_2$, which will be the same prediction residual that is available to the decoder. At the decoder side, the local RAHT coefficients are entropy decoded from the bitstream, de-quantized, and inverse-transformed to recover the prediction residual $\Delta a_2$. The prediction residual $\Delta a_2$ may be added to the prediction $a_2'$ to obtain a reconstructed attribute value $a_2 = a_2' + \Delta a_2$.

In some embodiments coefficients of a respective RAHT are encoded in a bitstream for each of the plurality of subtrees.

In some embodiments, the attributes of the first subtree 806 are reconstructed after obtaining the intra prediction $a_2'$ of the second attribute value of the second node. This may be described as replacing the attribute $a_1$, which was temporarily associated with nodes 808, 812, 814 (and possibly other nodes in subtree 806) with actual reconstructed attribute values. Those actual reconstructed attribute values may be obtained using conventional attribute coding techniques and/or any of the techniques described herein.

Some embodiments include a computer-readable medium storing instructions for performing any of the methods described herein. The computer-readable medium may be a non-transitory storage medium.

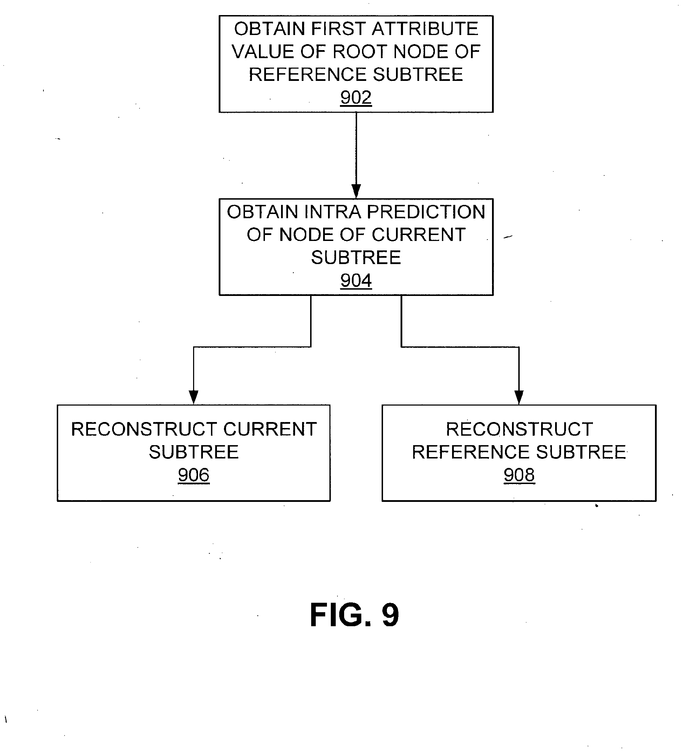

FIG. 9 is a flow diagram illustrating a point cloud decoding method according to some embodiments. At 902, a first attribute value is obtained for a first node in a tree structure including a plurality of subtrees, each subtree having a respective root node and a plurality of leaf nodes, the first node being a root node of a first one of the subtrees (referred to in FIG. 9 as a reference subtree). The first attribute value may be obtained using intra prediction and with residuals encoded using a global RAHT as described above. At 904, an intra prediction is obtained of a second attribute value of a second node, the second node being a node (e.g. a leaf node or a node at another layer) of a second one of the subtrees (referred to in FIG. 9 as a current subtree) different from the first subtree. In obtaining the intra prediction, at least a third node is used as a reference node, where the third node is a node of the reference subtree and wherein the first attribute value is used as an attribute value of the third node for purposes of the intra prediction. At 906, the current subtree is reconstructed, e.g. using residuals encoded using a local RAHT associated with the current subtree. At 908, the reference subtree is reconstructed, e.g. using residuals encoded using a local RAHT associated with the reference subtree.

In example implementations, the nodes used as reference nodes for intra prediction may be appended to the neighboring subtree. The tree structure may depend on the spatial position of each node, and this position is preserved for the already decoded neighboring blocks. For blocks that have not yet been encoded, the average attribute of the block may be appended. Example embodiments also add child nodes to the block, where all child nodes may have the same attribute: the average attribute of the block.

In some embodiments, the temporary child nodes may have the same position as the actual child nodes of the neighboring block. In some embodiments, the neighboring block is populated with all possible child nodes. In some embodiments, only one temporary child node is added to the block for each layer.

With the use of example embodiments, the attributes can be encoded/decoded in parallelizable blocks, allowing acceleration in the encoding/decoding process for real time applications.

**Example system hardware.**

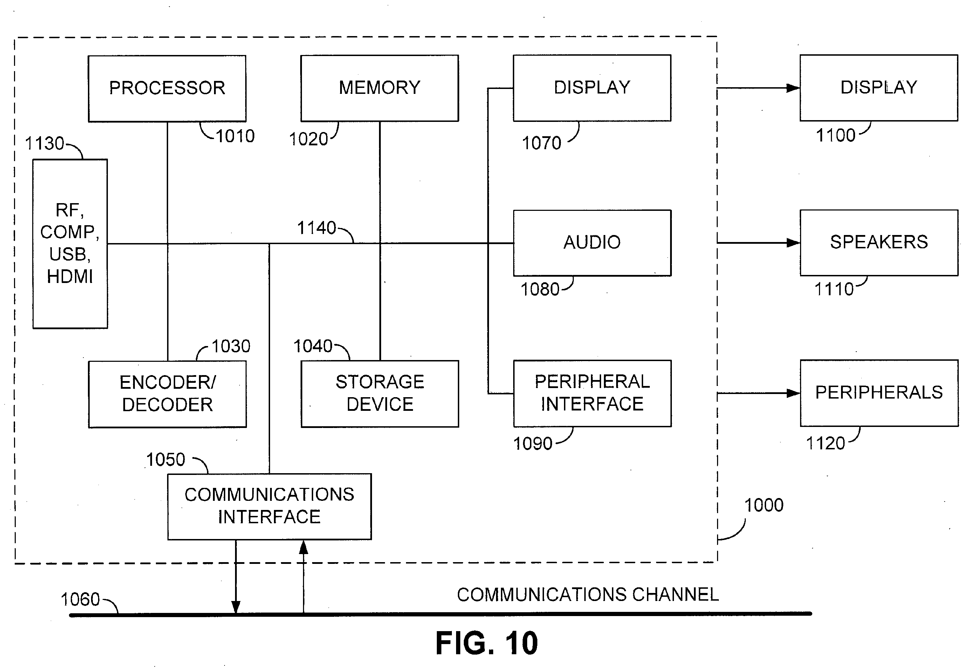

Example embodiments of encoders and/or decoders (collectively coders) configured to implement embodiments described herein may be implemented using systems such as the system of FIG. 10. FIG. 10 is a block diagram of an example of a system in which various aspects and embodiments are implemented. System 1000 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded point cloud or decoded point cloud, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input point cloud, the decoded point cloud or portions of the decoded point cloud, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1C, include composite video.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement 1140, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

**Additional embodiments.**

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

The aspects described and contemplated in this disclosure can be implemented in many different forms. While some embodiments are illustrated specifically, other embodiments are contemplated, and the discussion of particular embodiments does not limit the breadth of the implementations. At least one of the aspects generally relates to point cloud encoding and decoding, and at least one other aspect generally relates to transmitting a bitstream generated or encoded. These and other aspects can be implemented as a method, an apparatus, a computer readable storage medium having stored thereon instructions for encoding or decoding point cloud data according to any of the methods described, and/or a computer readable storage medium having stored thereon a bitstream generated according to any of the methods described.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Also, as used herein, the word "signal" refers to, among other things, indicating something to a corresponding decoder. For example, in certain embodiments the encoder signals a particular one of a plurality of parameters for region-based filter parameter selection for de-artifact filtering. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types:

A bitstream or signal that includes one or more of the described syntax elements, or variations thereof.

A bitstream or signal that includes syntax conveying information generated according to any of the embodiments described.

Creating and/or transmitting and/or receiving and/or decoding a bitstream or signal that includes one or more of the described syntax elements, or variations thereof.

Creating and/or transmitting and/or receiving and/or decoding according to any of the embodiments described.

A method, process, apparatus, medium storing instructions, medium storing data, or signal according to any of the embodiments described.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magnetooptical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A point cloud decoding method comprising:

obtaining a first attribute value for a first node in a tree structure including a plurality of subtrees, each subtree having a respective root node and a plurality of leaf nodes, the first node being a root node of a first one of the subtrees; and obtaining an intra prediction of a second attribute value of a second node, the second node being a node of a second one of the subtrees different from the first subtree, wherein at least a third node is used as a reference node for the intra prediction, the third node being a node of the first subtree and being associated with a respective voxel, and wherein the first attribute value is used as an attribute value of the third node for purposes of the intra prediction.

2. A point cloud encoding method comprising:

for a plurality of voxels, obtaining data representing at least one attribute of the respective voxel, wherein each voxel corresponds to a node of a tree structure, the tree structure including a plurality of subtrees, each subtree having a respective root node and a plurality of leaf nodes; obtaining a first attribute value for a first node, the first node being a root node of a first one of the subtrees; and obtaining an intra prediction of a second attribute value of a second node, the second node being a node of a second one of the subtrees different from the first subtree, wherein at least a third node is used as a reference node for the intra prediction, the third node being a node of the first subtree, and wherein the first attribute value is used as an attribute value of the third node for purposes of the intra prediction.

3. A point cloud decoding apparatus comprising one or more processors configured to perform at least:

obtaining a first attribute value for a first node in a tree structure including a plurality of subtrees, each subtree having a respective root node and a plurality of leaf nodes, the first node being a root node of a first one of the subtrees, wherein the first attribute value represents an attribute of a respective voxel; and obtaining an intra prediction of a second attribute value of a second node, the second node being a node of a second one of the subtrees different from the first subtree, wherein at least a third node is used as a reference node for the intra prediction, the third node being a node of the first subtree associated with a respective voxel, and wherein the first attribute value is used as an attribute value of the third node for purposes of the intra prediction.

4. A point cloud encoding apparatus comprising one or more processors configured to perform at least:

for a plurality of voxels, obtaining data representing at least one attribute of the respective voxel, wherein each voxel corresponds to a node of a tree structure, the tree structure including a plurality of subtrees, each subtree having a respective root node and a plurality of leaf nodes; obtaining a first attribute value for a first node, the first node being a root node of a first one of the subtrees; and obtaining an intra prediction of a second attribute value of a second node, the second node being a node of a second one of the subtrees different from the first subtree, wherein at least a third node is used as a reference node for the intra prediction, the third node being a node of the first subtree, and wherein the first attribute value is used as an attribute value of the third node for purposes of the intra prediction.

5. The method of claim 1 or 2, or the apparatus of claim 3 or 4, wherein a plurality of nodes in the first subtree are used as reference nodes for the intra prediction, and wherein the first attribute value is used as an attribute value of each of the plurality of reference nodes.

6. The method of claim 1 or 2 or claim 5 as it depends from claim 1 or 2, or the apparatus of claim 3 or 4 or claim 5 as it depends from claim 3 or 4, wherein the first node is at a layer $L_{global}$ in the tree structure, further comprising signaling in a bitstream information identifying the layer $L_{global}$.

**7.** The method of claim 6 as it depends from claim 1 or 2, or the apparatus of claim 6 as it depends from claim 3 or 4, wherein each of the plurality of subtrees has a root node at the layer $L_{global}$.

**8.** The method of claim 1 or 2 or claims 5-7 as they depend from claim 1 or 2, or the apparatus of claim 3 or 4 or claims 5-7 as they depend from claims 3 or 4, wherein obtaining the first attribute value for the first node comprises obtaining an intra prediction of the first node from attribute values of nodes at a same layer as the first node in the tree structure.

**9.** The method of claim 8 as it depends from claim 1 or 2, or the apparatus of claim 8 as it depends from claim 3 or 4, wherein a prediction residual of the first node is encoded using a first region-adaptive hierarchical transform, RAHT, and wherein obtaining the first attribute value for the first node comprises adding the prediction residual of the first node to the intra prediction of the first node.

**10.** The method of claim 9 as it depends from claim 1 or 2, or the apparatus of claim 9 as it depends from claim 3 or 4, wherein coefficients of the first RAHT are encoded in a bitstream.

**11.** The method of claim 1 or 2 or claims 5-10 as they depend from claim 1 or 2, or the apparatus of claim 1 or 2 or claims 5-10 as they depend from claim 1 or 2, wherein a prediction residual of the second node is encoded using a second region-adaptive hierarchical transform, RAHT, further comprising reconstructing the second attribute value of the second node by adding the prediction residual of the second node to the intra prediction of the second node.

**12.** The method of claim 11 as it depends from claim 1 or 2, or the apparatus of claim 11 as it depends from claim 3 or 4, wherein coefficients of the second RAHT are encoded in a bitstream.

**13.** The method of claim 1 or 2 or claims 5-12 as they depend from claim 1 or 2, or the apparatus of claim 3 or 4 or claims 5-12 as they depend from claim 3 or 4, wherein, for each of the plurality of subtrees, coefficients of a respective RAHT are encoded in a bitstream.

**14.** The method of claim 1 or 2 or claims 5-13 as they depend from claim 1 or 2, or the apparatus of claim 3 or 4 or claims 5-13 as they depend from claim 3 or 4, further comprising reconstructing attributes of the first subtree after obtaining the intra prediction of the second attribute value of the second node.

**15.** A computer-readable medium storing instructions for performing the method of any of claims 1 or 2 or claims 5-13 as they depend from claim 1 or 2.

FIG. 1

| $i = 0$<br>$w = 0$ | $i = 1$<br>$w=1$<br>R=9<br>G=129<br>B=44 | $i = 2$<br>$w=1$<br>R=29<br>G=135<br>B=132 | $i = 3$<br>$w=0$ | $i = 4$<br>$w=1$<br>R=68<br>G=149<br>B=231 | $i = 5$<br>$w=1$<br>R=82<br>G=163<br>B=185 | $i = 6$<br>$w=0$ | $i = 7$<br>$w=0$ | $i = 8$<br>$w=1$<br>R=123<br>G=201<br>B=53 | $i = 9$<br>$w=1$<br>R=135<br>G=213<br>B=11 | $i = 10$<br>$w=1$<br>R=164<br>G=172<br>B=0 | $i = 11$<br>$w=1$<br>R=202<br>G=102<br>B=0 | $i = 12$<br>$w=1$<br>R=241<br>G=32<br>B=1 | $i = 13$<br>$w=0$ | $i = 14$<br>$w=0$ | $i = 15$<br>$w=0$ |
|---|---|---|---|---|---|---|---|---|---|---|---|---|---|---|---|

# FIG. 2

FIG. 3

Layer 0

w=9
R=117
G=144
B=73

Layer 1

w=4
R=47
G=144
B=148

w=5
R=173
G=144
B=13

Layer 2

w=2
R=19
G=132
B=88

w=2
R=75
G=156
B=208

w=4
R=156
G=172
B=16

w=1
R=241
G=32
B=1

Layer 3

w=1
R=9
G=129
B=44

w=1
R=29
G=135
B=132

w=2
R=75
G=156
B=208

w=0

w=2
R=129
G=207
B=32

w=2
R=183
G=137
B=0

w=1
R=241
G=32
B=1

w=0

Layer 4

| i = 0 | i = 1 | i = 2 | i = 3 | i = 4 | i = 5 | i = 6 | i = 7 | i = 8 | i = 9 | i = 10 | i = 11 | i = 12 | i = 13 | i = 14 | i = 15 |
|---|---|---|---|---|---|---|---|---|---|---|---|---|---|---|---|
| w = 0 | w=1 | w=1 | w=0 | w=1 | w=1 | w=0 | w=0 | w=1 | w=1 | w=1 | w=1 | w=1 | w=0 | w=0 | w=0 |
| | R=9 | R=29 | | R=68 | R=82 | | | R=123 | R=135 | R=164 | R=202 | R=241 | | | |
| | G=129 | G=135 | | G=149 | G=163 | | | G=201 | G=213 | G=172 | G=102 | G=32 | | | |
| | B=44 | B=132 | | B=231 | B=185 | | | B=53 | B=11 | B=0 | B=0 | B=1 | | | |

EP 4 633 166 A1

**FIG. 4**

**FIG. 5**

GLOBAL
PORTION

SUBTREE     SUBTREE     SUBTREE     SUBTREE

LOCAL
PORTION

**FIG. 6**

RECONSTRUCTED REFERENCE BLOCK 702

CURRENT BLOCK 704

NON-RECONSTRUCTED REFERENCE BLOCK 706

$L_{global}$

**FIG. 7**

EP 4 633 166 A1

818

L$_{global}$-2

L$_{global}$-1

L$_{global}$

802

$a_1$

812

$a_1$

814

$a_1$

$a_1$

808

806

816

810

$a_2'$

804

**FIG. 8**

OBTAIN FIRST ATTRIBUTE
VALUE OF ROOT NODE OF
REFERENCE SUBTREE
902

OBTAIN INTRA PREDICTION
OF NODE OF CURRENT
SUBTREE
904

RECONSTRUCT CURRENT
SUBTREE
906

RECONSTRUCT
REFERENCE SUBTREE
908

# FIG. 9

EP 4 633 166 A1

**FIG. 10**

| | Europäisches Patentamt European Patent Office Office européen des brevets | **EUROPEAN SEARCH REPORT** | **Application Number** EP 24 31 5157 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 270 323 A1 (SONY GROUP CORP [JP]) 1 November 2023 (2023-11-01) * abstract; figures 1, 6 * * figures 14-21 * * paragraphs [0004], [0045], [0058] * * paragraph [0015] - paragraph [0038] * * paragraphs [0117], [0121] * * paragraphs [0131], [0229] * ----- | 1-15 | INV. H04N19/597 G06T9/40 H04N19/96 |
| A | SANDRI GUSTAVO ET AL: "A Motion-Compensated Inter-Frame Attribute Coding Scheme for Dynamic Dense Point Clouds", 2023 IEEE 25TH INTERNATIONAL WORKSHOP ON MULTIMEDIA SIGNAL PROCESSING (MMSP), IEEE, 27 September 2023 (2023-09-27), pages 1-6, XP034484599, DOI: 10.1109/MMSP59012.2023.10337730 [retrieved on 2023-12-08] * abstract; figures 1, 2 * * Sections III.A and D * ----- | 1-15 | |
| A | FLYNN (APPLE) D ET AL: "G-PCC: Geometry slicing", 131. MPEG MEETING; 20200629 - 20200703; ONLINE; (MOTION PICTURE EXPERT GROUP OR ISO/IEC JTC1/SC29/WG11), , no. m54677 28 June 2020 (2020-06-28), XP030289244, Retrieved from the Internet: URL:http://phenix.int-evry.fr/mpeg/doc_end _user/documents/131_OnLine/wg11/m54677-v1- m54677_v1.zip m54677.pdf [retrieved on 2020-06-28] * page 3 - page 4; figure 2b * ----- -/-- | 6,7 | TECHNICAL FIELDS SEARCHED (IPC) H04N G06T |

The present search report has been drawn up for all claims

| Place of search | Date of completion of the search | Examiner |
|---|---|---|
| The Hague | 13 September 2024 | Streich, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | GUSTAVO SANDRI (INTERDIGITAL) ET AL: "[G-PCC][EE13.70] On the localization of RAHT", 146. MPEG MEETING; 20240422 - 20240426; RENNES; (MOTION PICTURE EXPERT GROUP OR ISO/IEC JTC1/SC29/WG11), , no. m67093 17 April 2024 (2024-04-17), XP030318146, Retrieved from the Internet: URL:https://dms.mpeg.expert/doc_end_user/d ocuments/146_Rennes/wg11/m67093-v2-m67093. zip m67093.docx [retrieved on 2024-04-17] * abstract; figures 5-7 * * Section 4 * | | |

TECHNICAL FIELDS
SEARCHED        (IPC)

The present search report has been drawn up for all claims

| Place of search | Date of completion of the search | Examiner |
|---|---|---|
| The Hague | 13 September 2024 | Streich, Sebastian |

EPO FORM 1503 03.82 (P04C01)

## ANNEX TO THE EUROPEAN SEARCH REPORT
## ON EUROPEAN PATENT APPLICATION NO.

EP 24 31 5157

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2024

| Patent document cited in search report | | Publication date | Patent family member(s) | | Publication date |
|---|---|---|---|---|---|
| EP 4270323 | A1 | 01-11-2023 | CN | 116670721 A | 29-08-2023 |
| | | | EP | 4270323 A1 | 01-11-2023 |
| | | | JP | WO2022145214 A1 | 07-07-2022 |
| | | | KR | 20230125186 A | 29-08-2023 |
| | | | US | 2024056604 A1 | 15-02-2024 |
| | | | WO | 2022145214 A1 | 07-07-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. GRAZIOSI et al.** An overview of ongoing point cloud compression standardization activities: video-based (V-PCC) and geometry-based (G-PCC). *APSIPA Transactions on Signal and Information Processing*, 2020, vol. 9 (1), e13

- GeS-TM v4: User manual of Test Model v4 for Geometry-based Solid point cloud coding. *ISO/IEC JTC1/SC29/WG7, 144th MPEG meeting, Hannover, Tech. Rep. N00750*, October 2023